# EUROPEAN PATENT APPLICATION

(11) **EP 3 174 240 A1**
(43) Date of publication of application: **31.05.2017**
(21) Application number: 14867795.8
(22) Date of filing: 08.12.2014
(51) Int. Cl.: H04L 9/32, G06K 17/00

(54) **DIGITAL TOKEN SYSTEM FOR PHYSICAL MEDIUM DIGITALIZATION AND PHYSICAL STORE OPTIMIZATION**

(30) Priority: 08.12.2013 CN 201310668451
(71) Applicant: Ye, Mao, Markham ON L6E 0N3 (CA)
(72) Inventor: YANG, Jie, Changzhou Jiangsu 213000 (CN); YE, Mao, Markham Ontario L6E 0N3 (CA)
(74) Representative: McQueen, Andrew Peter
(86) International application number: PCT/CN2014/093281
(87) International publication number: WO 2015/081899

(57) **Abstract**

The present invention designs a digital token system for the digitalization of physical medium carrying information and the optimization of a physical store, and utilizes the system to digitize the physical medium carrying information such as an identity card (including a card) and a financial card (including a bank card), with the employment of electronic media throughout the manufacturing, issuing and usage process, thus reducing or avoiding the manufacturing of physical media, improving issuing and usage efficiency, and greatly enhancing privacy and security. The present invention is particularly suitable to digitalize any physical media carrying information carried by a user. The digitalized financial card and other forms of the digital token system are applied to the optimization of a physical store, such that the physical store utilizes the information technology of a mobile Internet to optimize checkout and shopping methods, thus creating novel retail commerce methods of "offline to online (O2O)" and "offline to online + online to offline (double 020, or 2O2O)" combining offline with online, the retail commerce methods comprising: (1) distributive checkouts; (2) cart-less shopping.

## Description

### FIELD OF THE INVENTION

This invention relates to the use of a Digital Token system that digitalizes physical media containing information such as identities (including identity cards) and financial cards (including bank cards). Digitalized financial/bank cards and other forms of this digital token system may be applied to optimize physical stores in payment or shopping methods via mobile Internet technologies.

### BACKGROUND OF THE INVENTION

Traditionally, the issuance and use of an information-contained physical medium such as an identity (including an identity card), a financial/bank card, etc., follows the following process.
(1) A user makes an application.
(2) The authority reviews the application, upon approval sends the user's information (often sensitive or private) to a physical media manufacturing facility.
(3) The physical media manufacturing facility makes the physical medium with information (such as a passport, an identity card, a financial/bank card, etc.), usually adding security mechanisms to the physical medium.
(4) The information-contained physical medium is picked up by or mailed to the user.
(5) When the user shows the physical medium on a terminal from the same authority or another authority, the terminal verifies the authenticity and integrity of the physical medium, as well as the association between the user and the physical medium by manual review, automatic machine reading, or a combination of these two methods.
(6) If the above verification passes, the user is granted the permission or privilege for certain action(s) or operation(s) by/on the human or machine terminal.

"Digital wallet" technologies have been used to optimize and/or integrate physical media for financial/bank cards. For example, Google Wallet scans multiple financial/bank cards and stores such information in a smart phone. The user chooses a specific card from the smart phone's mobile app that transmits the card information to the reading terminal through near field communication (NFC) technology to complete the transaction. Another example is the Coin system, expected to be released in the summer of 2014 (see http://www.onlycoin.com, web visited on November 14, 2013). The Coin system scans up to eight financial/bank cards' information and stores such information in a super card. The user presses a button on the super card repeatedly to choose a specific card to complete the payment.

Two mainstream shopping methods currently exist, supported by a variety of payment methods such as credit card payment and mobile payment.

One emerging and developing method is online shopping where the major shopping process like merchandise display, selection, purchase, etc., is carried out on the Internet, and the items purchased are delivered from the seller to the buyer through a logistics system.

The other method is the traditional offline shopping, for instance purchasing merchandise at a physical store or counter and paying for the items by cash or a financial/bank card. Currently physical stores have adopted new technologies to improve in-store shopping experience. For example, some stores in North America have adopted self-checkout: customers scan items by themselves at checkout and complete transactions using financial/bank cards.

In addition, the business method called "Online2Offline" (020), namely using online technologies to promote offline sales, is contributing to the integration of online and offline shopping.

### DESCRIPTION OF RELATED ART

Physical media such as identities (including identity cards) and financial/bank cards have the following disadvantages.
(1) Making a physical medium involves certain manufacturing costs, and its security mechanism requires extra costs from research & development (R&D) as well as production.
(2) It takes time to make and mail the physical medium, ranging from several days to several months.
(3) Because of (1) and (2) above, reporting the loss of the physical medium and getting it replaced is cumbersome, and the loss of the physical medium often causes additional security leakage.
(4) The user's personal information and some other related information is often printed on the surface of the physical medium, which is visible to others, and may cause privacy and/or security leakage.
(5) In modern societies, a user may own an increasing number of information-contained physical media and carrying these media becomes more and more difficult. For example, so many financial/bank cards, membership cards, and ID cards, may bulge the user' wallet.

Offline shopping with payments by cash, bank cards or digital wallets provides real time experiences to customers, but has certain disadvantages, compared to online shopping.
(1) Due to high store maintenance costs, prices of commodities in physical stores are often higher so that many offline stores gradually become "experience stores" for online stores.
(2) Its shopping efficiency is relatively low, and the main bottleneck lies in two aspects.
   (A) Shopping carts take up a lot of space and also consume customers' energy.
   (B) Customers usually need to wait in line at checkout. This waiting mainly comes from the following three aspects.
      (a) A limited number of checkout lanes.
      (b) Items having to be removed from shopping carts for their barcodes or QR codes to be read into the checkout system.
      (c) Slow payment methods by cash or financial/bank cards.

### DETAILED DESCRITION OF THE INVENTION

In light of the problems of information-contained physical media, the main goal of this invention is to provide a digital token system to digitalize physical media including but not limited to identities (including identity cards) and financial/bank cards. This digital token system, together with digitalized financial/bank cards and mobile Internet information technologies, can optimize checkout and shopping methods for physical stores.

To achieve the above objectives, the technical solutions adopted in this invention are described below.

This invention comprises the following parts.
1. A general abstract design comprised of authority, user and digital token, and terminal.
2. A digital token system.
3. The generalized design of the digital token and applications of the digital token system in physical store optimization.
4. Other applications of the digital token system.

Although the above first three parts can be independent of each other, overall the former is the design basis for the latter (that is, 1 is the basis for 2 and 3, and 2 is the basis for 3), described as follows.
1. This invention is based on a generalized triple-element abstract design that is applicable to the traditional physical media as well as electronic media, including three elements of Authority, User and Token, and Terminal.
   (1) The user makes an application and upon approval the authority grants the token to the user.
   (2) The user moves, carrying the token.
   (3) The user uses the token or its re-encoded form at a decentralized Terminal connected to the same authority or a standalone terminal or a terminal from another authority, or sends the token or its re-encoded form remotely to the terminal. The user is granted appropriate permission(s) and/or privilege(s) once the token is verified.

   Two key points in the applications of the above abstract design are:
   (1) The authenticity and integrity of the token must be ensured during the move and the use of the token. For traditional physical media, this is done by security mechanism on the physical media. For electronic media (such as applications of credit cards for online shopping), this is done by methods such as digital encryption, digital signature, etc.
   (2) The association between the user and the token must be ensured. For a traditional identity (including an identity card), such association is verified by checking the photo on the physical media and comparing it to the user's face. For a traditional financial/bank card, the association is verified by comparing the user's signatures, or comparing the name on the card to that on the user's identity and further comparing the photo on the identity to the user's face. For a digital medium, the association between the user and the token is usually implicit: only the user themselves is supposed to use the corresponding token. (However, this is often not true: for example, a user can use another person's credit card to place an order online for the other person. And this may theoretically explain why there are frequent cases of online "token" fraud.)
2. Based on the above abstract design, this invention provides a digital token system, comprising the following components.
   (1) A user applies for a digital token to the registration branch of the authority (issuing authority). The registration branch verifies the user's information.
      The system also includes:
   (2) The issuing authority digitalizes the user's information and other relevant information upon approving the user's application, and encapsulates such information in an electronic package. The electronic package is called a Digital Token.

   The electronic package may contain one or more electronic files.
   The electronic package may contain digital background image of the corresponding information-contained physical media, the user's digital photo, digital image of signature, and other digitalized biometric identification, including but not limited to fingerprint, voiceprint, iris scanning, and retinal scanning, in addition to the information that could be otherwise printed on the corresponding physical medium (for an identity (including an identity card), such printed information may include the user's name, date of birth, issuance date, expiration date, document/card number, etc.; for a financial/bank card, such information may include the user's name, card number, expiration date, verification code, etc.), and digitized information that could be otherwise hidden on the corresponding physical medium.
   The electronic package may also contain electronic simulation of the security mechanism on the information-contained physical media, to implement the corresponding security mechanism in an electronic form, including but not limited to digital fingerprint(s) or digital watermark(s), that is, simulating the hardware security mechanism in a software form. The digital fingerprint(s) may further be encrypted. The encrypted or non-encrypted digital fingerprints may be distributed in different locations in the electronic package. Encrypted digital fingerprint may also be nested, that is, an encrypted section contains (an) other encrypted section(s). The electronic package itself may also be encrypted.
   The electronic package may adopt information technologies including but not limited to digital certificate and digital signature, to ensure the authenticity, integrity and non-repudiation of the electronic package. The electronic package may optionally have no digital signature, and instead, the content of the electronic package may be verified directly at a terminal. Furthermore, the electronic package may have a digital time stamp that cannot be modified once stamped.
   The system also includes:
   (3) The issuing authority sends the digital token to the user by an electronic transmission, wired or wireless or a combination of both (for example, transmission over the Internet).

   The electronic transmission may be achieved with encryption or without encryption.
   The electronic transmission may be done by push or pull.
   For the encrypted electronic transmission, if it is done by push, the issuing authority may directly push the digital token to the user, for example, by e-mail or by sending the digital token directly to the user's mobile device. If the decryption password is static, it may be sent to the user by a SMS text or a mobile app message. If the encrypted transmission is done by pull, the issuing authority may store the above digital token on (a) secure server(s), and notify the user the Internet address and the retrieval password for the user to download the digital token.
   The system also includes:
   (4) The user stores one or multiple digital tokens from the same issuing authority or different issuing authorities into a mobile device.

   An ideal form of the mobile device is a smart phone, where the digital token management is implemented via an internal mobile app. For a user with no smart phone, such mobile device may be a simplified portable device with digital token storage and management.
   The mobile device should store digital tokens in encryption. The digital tokens may be encrypted in categories or layers or a combination of both, according to certain criteria including but not limited to frequency of use. Encryption in categories is to classify the digital tokens into different categories and encrypt each category individually. Encryption in layers is to place the digital tokens in two or more different encrypted layers. If the user uses their own private key for the encryption, the private key should be further protected, for instance by being placed in an external Cloud, or by being placed in a separate smart card.
   The mobile device may be connected to one or more external Clouds to achieve digital token export and removal from the mobile device, as well as import from the Cloud, so as to achieve additional security. All or part of the digital tokens in the mobile device may also have backup(s) in the external Cloud(s). If mobile Internet technologies can guarantee the availability of network connection and the availability of the Cloud(s), all the digital tokens may be stored in the Cloud(s) and any digital token may be used on demand.
   The mobile device or the after-mentioned terminal device may visualize the content inside a digital token and display it on the screen or generate a digital file (such as a digital image or a PDF file) to simulate the visual appearance of the corresponding physical medium containing the information, for visual inspection, or for copying or printing. The digital file may have the user's digital signature or a digital time stamp or both.
   The mobile device should use security mechanism(s) such as personal identification number (PIN) or fingerprint recognition to authorize access to the digital token(s).
   The system also includes:
   (Optional) (5) An Agent Card receives a digital token at a given time from the mobile device.

   The agent card when receiving digital tokens may be connected to the mobile device by wire or wireless connection. The wireless connection may but not necessarily be via NFC.
   The size of the agent card may be flexible, as long as it matches corresponding reading terminals. To maximize compatibility with existing terminal devices (for example, financial/bank card terminals) for backward compatibility, currently it is ideal that the size of the agent card is the same as that of the financial/bank cards, i.e., 85.60mm × 53.98mm, pursuant to the ISO/IEC 7810 Id-1 standard.
   The agent card may have a dynamic storage module corresponding to the information storage module on the physical medium, in order to write the relevant content inside the digital token into the agent card. For example, the agent card may have a writable magnetic stripe if the corresponding traditional financial/bank cards use magnetic stripes to store information. When the agent card receives a digital token corresponding to a financial/bank card, the relevant information can be dynamically written into the agent card's magnetic stripe for it to be read at a financial/bank card terminal. The agent card may also have a dynamically writable storage module for including but not limited to an EMV (Europay, MasterCard and Visa) chip or an NFC chip. This feature is designed primarily for backward compatibility with existing terminal devices for the universal adoption of this invention system. If in the future this system is widely accepted while existing terminals become obsolete, a digital token inside the agent card is directly read for verification and there is no need to write the digital token's content into the agent card's dynamically writable storage module other than that storing the digital token itself.
   The agent card may be in a "keep mode" or a "forget mode." In the "keep mode," a digital token received from the mobile device can be kept on the agent card until modified. In the "forget mode," the digital token is removed from the agent card upon timeout or upon a limited number of readings (for example, one time).
   Optionally, the agent card may require an activation. In the "keep mode," the agent card remains inactive upon timeout or upon a pre-set number of readings, and needs to be activated for the next use, without re-downloading the same digital token from the mobile device.
   The agent card may have a temporary write-back storage unit for receiving write-back data from a terminal. When the agent card is close to the mobile device, the write-back data are written back to the mobile device through a wired or wireless connection, and such data are erased from the temporary storage unit in the agent card.
   The agent card is mainly to achieve two functions.
   (A) It exists in a form compatible with existing terminals for physical media.
   (B) When the agent card is used, it is physically disconnected with the mobile device so that only one digital token is exposed to ensure the security of other digital tokens on the mobile device.

   If compatible terminals can directly read the digital tokens on the mobile device and the software and hardware security measures on the mobile device ensure that only one digital token on the mobile device that is chosen by the user is accessed by a terminal at a given time, the agent card may be removed from this system.
   The agent card may implement a "cache" mode, that is, the agent card can store the information of two or more digital tokens and use the information of only one digital token at a given time. For example, an agent card compatible with digital tokens for financial/bank cards may have a "duality" mode in which there is a separate set of dynamically writable magnetic stripe, dynamic EMV chip and/or dynamically writable NFC chip at various positions on each side of the agent card, so that the information of two different digital tokens corresponding to two financial/bank cards can be stored in the same agent card.
   The user may have additional agent card(s) as backup.
   The system also includes:
   (6) A terminal verifies the digital token.

   The terminal may be manual, automatic, or a combination of both.
   The terminal reads the data in the agent card for verification. If the verification passes, the terminal grants the user the corresponding permission(s) or privilege(s); otherwise the terminal rejects the user.
   The terminal may be connected to the issuing authority of the digital token (i.e., the terminal is an terminal authorized by the issuing authority), and have access to its backend database for verification.
   The terminal may be unconnected to the issuing authority of the digital token (i.e. the terminal is not an terminal authorized by the issuing authority), but a relatively standalone terminal, or connected to another issuing authority (i.e., the terminal is an terminal authorized by another issuing authority). For example, a digital token corresponding to a national passport can be checked by the border agency of another state, where the border agency only needs to check the digital signature of the digital token to ensure its authenticity and integrity with no need to connect to the original issuing authority of the passport.
   The terminal may also issue a new digital token, which is written back to the agent card, and then synchronized into the mobile device and attached to the original digital token. An example includes but is not limited to: a citizen of a state shows the digital token of their passport at another state's embassy or consulate to apply for a visa, the visa issuing state issues a digital token for the visa, and the digital token for the visa is written back into the mobile device and attached to the original digital token of the passport.
   The system also includes:
   (7) A backend infrastructure provides verification services for the terminal.

   The infrastructure needs to check the digital token and/or the information in the digital token. For digital tokens using digital signatures, currently a widely used backend infrastructure is Public Key Infrastructure (PKI). For a detailed description of PKI please refer to relevant literature.
   The system also includes:
   (8) The user is granted appropriate permission(s) and/or privilege(s) once the digital token is verified.

   The appropriate permission(s) and/or privilege(s) granted to the user once the digital token is verified, for example, include but are not limited to: border crossing clearance granted to a user whose digital tokens of the passport and the visa are verified, payment authorization granted to a user whose digital token of the credit card is verified, etc.
   In the above system, when a specific digital token is selected in the mobile device, the digital token itself may be not used directly, instead, one of its re-encoded forms may be used, including but not limited to the following methods.
   (A) The content of the digital token may be encoded into a visual code such as a QR code.
   (B) The content of the digital token may be hashed.
   (C) The content of the digital token maybe virtualized. For example, the original card number, expiration date, and verification code of a financial/bank card may be substituted by a set of virtualized values.
   (D) The content of the digital token may further be tokenized, i.e., substituting the original digital token by a digital token bearing non-sensitive or less sensitive data.

   The life span of a re-encoded form of the digital token should not be longer than the original digital token, and may be set to a definite shorter time span or expire upon a certain number of uses (for example, one time). The re-encoding may change if needed.
   The re-encoding of the digital token can enhance security of the digital token and can also make the digital token compatible with more terminal devices.
   If one single digital token in the above system is lost (for example, the agent card in the "keep mode" is lost and the card has the information of the digital token but not its re-encoded form), the digital token may be reported as lost through traditional ways such as telephone or through the mobile app in the mobile device. Upon verification, the issuing authority may revoke the old digital token in real-time and re-issue a new one immediately.
   If the mobile device with multiple digital tokens is lost, the user may attempt to wipe all digital tokens remotely, and restore the digital tokens from the Cloud(s) into a new mobile device. If the attempt to wipe the digital tokens fails, the user may report loss of the tokens and have them revoked in real-time, and receive new tokens from the issuing authorities immediately.
   In addition to the mobile device with multiple digital tokens and the agent card that uses one specific digital token, the above system implements full realization of the digital production, issuance, and use of digital tokens. Compared to traditional media containing information, this system greatly improves the economy, efficiency, privacy and security and has potentially a wide range of applications.
   A digital token (or its re-encoded forms) generated in the above system may be electronically transmitted over the Internet directly to a trusted terminal for verification and obtain the appropriate permission(s) and/or privilege(s). An example includes but is not limited to: a citizen of a country may send the digital token (or its re-encoded form) of their passport to an embassy or consulate of another country to apply for a visa; if the application is approved, the embassy or consulate may send the digital token of the visa back to the user. The digital token or its re-encoded form of the passport may be the basis to generate the digital token of the visa, i.e., the digital token of the visa derives from the original digital token or its re-encoded form of the passport. Particularly, if digital signature (and encryption) technology is adopted, the security of the remote use of the digital token or its re-encoded form is safeguarded.
   Further, a digital token in the above system may be stored on the secure server(s) of the authority (issuing authority) or another designated service provider (the "secure server(s)" may be centralized or decentralized; may also be multi-layered or nested; or a combination of both (centralized/decentralized plus layered/nested)), and the user only obtains its re-encoded form such as a tokenized form as the index of the real token. When a third party is authorized, it can retrieve the real token or its re-encoded form from the secure server by the index / tokenized form. For example, the user may have a token index of a passport or a driver's license with digital signature, and an authorized third party can retrieve the digitalized passport or driver's license or their visualized form from the secure server(s) of the authority (issuing authority) or another designated service provider using the token index. As such, the security, authenticity and authority of the token is further enhanced.
   The system described above can be used not only to digitalize traditional physical documents (including cards), but digitalize any application that uses a physical medium to transmit information, for examples including but not limited to: paper ballots, fax, various types of instruments (such as bank drafts, etc.). The above system is also applicable to the digitalization of information that does not exist currently but could be otherwise contained in a physical medium.
3. The application of the above digital token system in physical stores is as follows.
   The first way to optimize a physical store is distributive checkout.
   (1) A customer retrieves an item from a store shelf.
   (2) The customer scans the label of the item into the mobile app on their mobile device. The label may be but is not limited to Universal Product Code (UPC), QR Code, NFC tag, and Radio Frequency Identification (RFID) tag. Or, the customer may scan the item directly into the mobile app using an object recognition technology.
   (3) Repeat the above steps (1) and (2) until the customer retrieves and scans all the items. If needed, these items may be put into a shopping cart.
   (4) The customer uses a digital wallet technology based on existing technologies or the above digital token system to pay for the items through mobile app, and receives a corresponding electronic receipt. The electronic receipt is a digital token issued by the store.
   (5) The customer shows the receipt at the store exit to verify that the items purchased have been paid for.

   The verification of the electronic receipt may be semi-manual or automatic.
   The semi-manual method is done first by an electronic receipt reader that verifies the validity of the electronic receipt and displays the list of items purchased to a store clerk, who then does a quick visual check of the items.
   With the automatic verification, an electronic receipt reader at the store exit verifies the validity of the electronic receipt and visualizes the items on a large screen at exit (preferably, the large screen is visible to the public), i.e., the digital pictures of the items are displayed on the large screen. Stricter methods may be adopted including but not limited to: dividing the items into "weighable" and "non-weighable" and verifying the total weight of all weighable items while visualizing all non-weighable items on the large screen.
   For users without mobile devices, the store may offer self-checkout at the exit.
   The second way to optimize a physical store is shopping without shopping cart (called "cartless shopping" hereinafter).
   The basic idea of cartless shopping is to take the disadvantage of offline stores being experience stores of online shopping to the extreme, turning "on-site experience" into the advantage of offline stores to attract customers. Its base principle is to divide a store into two parts: showroom, and storage space (warehouse). The showroom only has samples for customers to experience on-site, and if applicable, a number of small items for customers to pick up, while most items are stored in the warehouse. The basic shopping process of cartless shopping is as follows.
   (1) A customer experiences merchandise in the showroom, and scans the labels of items (or the items themselves using object recognition technology) to be purchased via a mobile device. The customer may specify the quantity (or weight) of each item.
   (2) The customer uses a digital wallet based on an existing technology or this digital token system to pay for the purchased items, and receives a corresponding electronic receipt, which is a digital token issued by the store.
   (3) The store receives the notification for the customer's payment, and the store clerks retrieve items from the warehouse.
   (4) The customer may temporarily go away for dining, coffee, reading or any other leisure activity, or continue to shop in nearby stores, or conduct other activities.
   (5) Once the paid items are ready, a message is pushed to the customer's mobile device notifying the customer that the items are prepared and showing the location for pickup. The location may be a labelled/numbered locker or a shopping cart at a specific location (the shopping cart may have an electronic label, which directly or indirectly corresponds to the electronic receipt and may have voice prompt and/or flashing signal).
   (6) The customer returns to the pickup area and picks up the items from the locker, or uses the electronic receipt to trigger the voice or flashing signal of the electronic label to find the shopping cart. If the locker has an electronic lock, the electronic receipt may be used as the electronic key to open the locker.
   (7) The customer leaves the store after retrieving the items.

   The store's order preparation time should be as short as possible, ideally five to ten minutes.
   To facilitate timely pickup, the store may offer incentives to customers who retrieve their items quickly, such as reward points. The number of points may be associated with the pickup speed.
   Mobile Internet technologies used for online shopping may be embedded in above Step (1) to integrate online and offline shopping. Online product reviews, online discounts or coupons search and application, price match (price protection) search and request, etc., may also be included in the mobile app on the mobile device. If the price match request cannot be accepted by the store, the mobile app may conduct cost estimate for the customer to decide whether or not to purchase such items in the store, via any of methods including but not limited to the following.
   (A) If a lower price is found in a nearby store, the location service on the mobile device, based on the Global Positioning System (GPS), may calculate the distance to drive to the other store, and then with the gas price, the extra cost may be estimated.
   (B) A cost estimate model may be used to calculate the time cost to order the same item online at a lower price.

   Mobile Internet technologies may also be embedded in the above described distributive checkout process.
   An ideal form of the mobile device is a smart phone. For customers without smart phones, the store may provide simplified mobile devices designated for cartless shopping for the customers to borrow (deposit may be required). The customers must return such mobile devices to the store after shopping.
   The above cartless shopping process may be further optimized, including but not limited to the following methods.
   (1) The application of "indoor navigation" system. The customer enters the keyword or the number of an item, or upload its picture, and the mobile app quickly provides the indoor position of the item, such as aisle number. More ideally, the mobile app gives visualized "indoor map navigation" and visualizes the customer's current location, destination of the item, and the (best) route to get to the destination.
   (2) The customer may pick up hand-held or small items from the showroom with no need of preparing them from the warehouse, and pay for such items by the distributive checkout or a traditional express checkout.
   (3) The customer may choose to have an order as a gift delivered to another person's home.
   (4) Bulky items, items out of stock at the current store but available at another franchise store or warehouse, or items a customer is unable to pick up right away for some reason, etc., may be delivered to the customer' home. The customer may also choose to buy the same kinds of items from another store and pick up the order or request the delivery via a logistics service.
   (5) The store may also deliver the items after preparation to a location specified by the customer, including but not limited to the trunk of the customer's vehicle (and/or its compartment if needed). For a vehicle equipped with a digital lock controlled by the above described digital token system, the customer may send a temporary digital token for the delivery person to access the vehicle's trunk and/or compartment. For a vehicle with a traditional key, an auxiliary key exchange system is needed. The fundamental of such system is as follows.
      (A) The customer informs the store of the location of the vehicle through the mobile app. The vehicle location information may be obtained by the following methods: parking lot location system (such as a GPS parking location service); the store assigns a number to each parking space (similar to an airport parking numbering system) and the customer enters their own parking number in the mobile app; the customer enters their license plate number and the vehicle location is determined by a video monitoring and scanning system; the customer puts the vehicle key into a locker that has a number corresponding to the parking space, which number is sent to the store.
      (B) The customer puts the vehicle's key in a locker corresponding to the parking space, and the locker can be accessed by the customer and the store delivery person.
      (C) The store processes the order. The store delivery person obtains the vehicle key to deliver the order to the vehicle trunk and/or compartment and returns the key to the original locker.
      (D) The store pushes delivery notification through the mobile app to the customer.
      (E) The customer retrieves the key from the locker and drives away.

   Ideally the mobile app may record the locker number and/or visualize the locker position information to help the customer to locate the locker that stores the key.
   The location of the locker may be one of the following locations.
   (A) A centralized location close to the store entrance/exit.
   (B) A centralized location in the parking lot; or several locations in the parking lot, for example, one at the end of each row of parking spaces.
   (C) Next to each parking space.
   (D) Attached to the vehicle, etc.

   Theoretically the customer may choose not to use the locker for key exchange but wait at the vehicle after receiving the delivery notification. This method requires high synchronization between the customer and the delivery person, as a more accurate estimate of delivery time for the delivery person to arrive at the vehicle is needed. One possible solution is: the current location of the delivery person is shown as "map" in the mobile app as well as the approximate "remaining time to arrival." This scheme is more feasible for a single store but may not work well for shopping from multiple stores such as shopping malls and outlets due to the asynchronous nature in those scenarios.
   The above delivery-to-vehicle method effectively implements short-distance express delivery around the store, and as such, any optimizations applicable to traditional logistics may be adopted here. These optimizations include but are not limited to the following methods.
   (A) One delivery person may deliver items for multiple customers on one trip. The items may be assigned to the delivery person according to the proximity of parking locations and/or that of delivery times.
   (B) The location of the delivery person and the approximate "remaining time to arrival" may be displayed on the map in the mobile app.
   (C) The delivery "person" may be robotized, automated, and/or turn into an unmanned aerial vehicle (UAV).

   The above carless shopping method requires the store to promptly and accurately prepare delivery items after receiving a payment notification. Besides increasing man power, the store's warehouse may use the following methods to improve the efficiency of item preparation.
   (1) For a paid order, since the items to be prepared are always known, the picking route may be optimized.
   (2) Corresponding to (1), the warehouse storage layout may be optimized in ways including but not limited to: the best-selling items may be placed at the front of the picking route, items may be placed in categories, etc.
   (3) Automation and robotization of the picking process may be increased in ways including but not limited to: equipping picking persons with automatic vehicles that can receive and follow optimized picking routes, increasing the number of picking robots, increasing the mobility of stocking shelves, etc.

   All these optimization methods may be designed and implemented by corresponding computer algorithms. Optimizing architectural design of the warehouse may also improve the picking efficiency.
   The above cartless shopping method is applicable to all types of physical stores that have shopping carts, particularly large warehouse stores such as Costco, bulky goods stores such as IKEA, supermarkets such as Walmart, stores that have long shopping routes and/or a large number of purchasable items such as shopping malls and outlet malls, etc. A shopping mall and an outlet mall may have lockers shared by multiple stores, so that customers may pick up items purchased from multiple stores from one spot.
   The above cartless shopping method also can turn an original warehouse, a storage center or even a cargo center into a cartless shopping center.

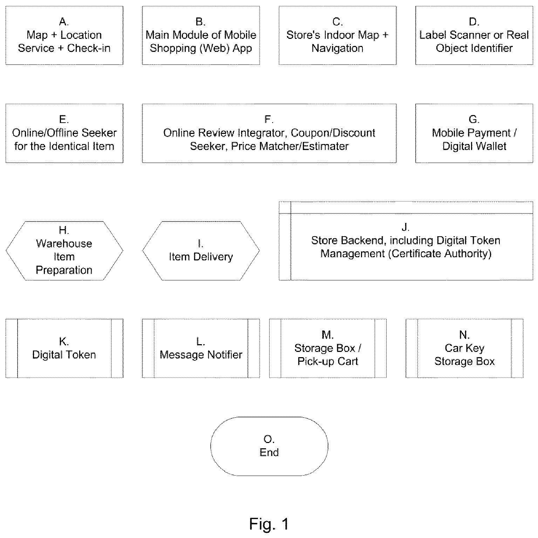

   Figure 1 lists the main modules of cartless shopping.
4. The aforementioned digital token system has very broad applications, including but not limited to:
   (1) Digital locks and their digital keys.
   (2) Digital identities, such as digitalized passports, driver's licenses or any other identifications.
   (3) Digital financial/bank "cards," membership "cards," etc.

### BENEFITS OF THE INVENTION

The inventor of this invention has designed a Digital Token system, which may be used to digitalize passport, identities, financial/bank cards, membership cards and any other information-contained physical media so that the process of issuing and using such media is all via electronic media, reducing or eliminating the need of physical media, increasing the efficiency of their issuance and usage, and highly enhancing security and privacy.

This invention not only is applicable to the digitalization of traditional physical documents (including cards), but also can digitalize any information-contained physical media, including but not limited to: paper ballots, fax, various types of bills (such as bank drafts, etc.). The invention can digitalize any portable information-contained physical media that may be carried with a user. This invention is also applicable to the digitalization of information that does not exist at present but would be otherwise contained in physical media.

In addition to the digitalization of the information-contained physical media and a very wide range of other applications, this invention and digitalized financial/bank cards can create new checkout and shopping methods for physical stores. Using the digital token system and corresponding digitalized financial/bank cards, physical stores can be optimized to implement new Offline2Online retailing methods, featured by (1) distributive checkouts and (2) cartless shopping, achieving the integration and merger of online and offline retailing as well as a retailing method of "Offline2Online + Online2Offline (double 020 or 2020)."

The new checkout and shopping methods, particularly the method of cartless shopping, can greatly enhance in-store business methods and shopping experience, including but not limited to the following.
(1) Store aisles appear much more spacious without shopping carts, and customers carry far less stuff while shopping in physical stores.
(2) Compared to traditional physical stores, it requires less space for showroom to achieve the same coverage of products, or the same space can hold more types of merchandise samples.
(3) Shopping speed is accelerated, so that more customer flow can be achieved within the same amount of time in the same space.
(4) Since the showroom only displays a limited number of samples for each item, human damage to merchandise can be greatly reduced.
(5) As "see" and "sell" are separated, the store prepares orders only after receiving payments, shoplifting can be greatly reduced, and so the number of store security persons, such as inspectors at store exit.
(6) Cashiers and checkout lanes are reduced.
(7) Customers' spending on dining, leisure and entertainment inside and around the store increase.

Compared to online shopping, cartless shopping provides a similar relaxing shopping experience inside a physical store, as well as additional advantages including but not limited to the following.
(1) Visual inspection and onsite experience of items.
(2) Less waiting time to obtain orders.
(3) No logistics cost if picking up in store.

The cartless shopping method will greatly reduce the operating costs of physical stores (to levels close to online retailers), thus enhancing the competitiveness of physical stores. Embedding mobile Internet technologies into the shopping process of physical stores can also promote online sales, realizing an Offline2Online retailing method, and integrate and merge online and offline retailing to create a shopping method of "Offline2Online + Online2Offline (double 020 or 2O2O)."

### BRIEF DESCRIPTION OF THE DRAWINGS

Figure 1 shows the main modules of cartless shopping.
Figure 2, based on Figure 1, depicts the main process of cartless shopping where an order is delivered to a vehicle that is wirelessly controlled by a digital key.
Figure 3, based on Figure 1, depicts the main process of cartless shopping where a customer picks up an order.
Figure 4, based on Figure 1, depicts the main process of cartless shopping where an order is delivered to a vehicle that is controlled by a traditional key.
Figure 5 is a comparison between physical financial/bank card and digitalized financial/bank card using this invention system.

### PREFERRED EMBODIMENTS OF THE INVENTION

The following examples are used to describe the preferred embodiments of the invention.
1. The digitalization of a financial/bank card (credit card is used as an example below and the processes for other types of financial/bank cards are similar) is used to show the production, issuance and use of a digital token.
   (1) A user makes a credit card application to a financial institution. The financial institution checks the user's credit record and other personal information to determine whether to approve the application.
   (2) If the above application is approved, the financial institution encapsulates the information corresponding to that stored on a traditional physical card (including the digital photo of the signature and the digital images of both sides of the card) into an electronic package, called the digital token of the credit card. The financial institution shall digitally sign the digital token based on a PKI system.
   (3) The financial institution pushes the digital token to the user's mobile device using encrypted electronic transfer through a designated mobile app.
      Such digital token may be activated using a traditional telephone call or SMS, or via the mobile app.
   (4) Repeat the above steps (1) to (3), the user may store multiple digital tokens from the same or different financial institutions into the same mobile device.
      The mobile device is connected to one or more external Clouds to implement export to Cloud, import from Cloud, backup to Cloud, restore from Cloud, and other functions for part or all of the digital tokens.
      Digital tokens are stored in the mobile device using encryption.
      One of the ideal forms of the mobile device is a smart phone. The smart phone manages digital tokens through the mobile app. Accessing the digital tokens requires password or fingerprint authentication.
   (5) An agent card may receive a re-encoded form of a specific digital token from the mobile device at a given time (which form is a temporary digital token associated with the original digital token).
      The agent card is a credit card sized card of 85.60mm × 53.98mm compliant to ISO/IEC 7810 Id-1 standard.
      The agent card has a dynamically writable magnetic stripe, a dynamically writable EMV chip, a dynamically writable NFC chip, etc. The temporary information receipt and storage unit is achieved by an NFC tag.
      When an operation similar to using a traditional credit card is required, the mobile app, based on the original digital token, dynamically applies for a temporary digital token (whose life span should be no longer than that of the original digital token or set to expire after a pre-set fixed time or after a pre-set fixed number of usages) through the mobile Internet to the secure server of the financial institution. Such temporary digital token is transmitted using the NFC technology to the dynamic NFC chip of the agent card, and the contents of the digital token are dynamically written to the magnetic stripe, the EMV chip, and/or the NFC chip corresponding to those on a traditional credit card.
      The power to operate dynamic writing on the agent card is provided by the mobile device via a wire or wireless connection.
      The mobile app may set spending limits like per-transaction limit, daily (weekly, monthly, etc.) maximum number of transactions, daily (weekly, monthly, etc.) limit, etc.
      The agent card has two operating modes: "keep mode" and "forget mode."
      In the "keep mode," the information received from the mobile device can remain on the agent card until the next rewrite. The mobile app on the mobile device has an option to set whether the agent card needs to be activated. If such option is checked, the agent card becomes inactive after a use, and needs to be activated from the mobile device before the next use.
      In the "forget mode," the information is erased after timeout or a limited number of usages (for example, one time). The setting of timeout and the number of usages may be set on the mobile device. Under this mode, the agent card has to be initiated from the mobile device and receive digital tokens from the mobile device for the agent card to be used.
      The agent card has a Duality mode, i.e., a separate set of dynamically writable magnetic stripe, dynamically writable EMV chip and dynamically writable NFC chip is located at different locations on each side of the agent card, so that the information of the digital tokens corresponding to two credit cards can be stored on the agent card.
      The users may have one or more additional agent cards as backup(s) in case the original card is lost.
      The mobile app to manage the digital tokens on the mobile device shall be paired with the agent card, thus each being the other's start key. If one cannot detect the other, neither can be used individually. This way, the loss of one of these two does not cause any security breach.
      A terminal equipment for traditional credit cards can read magnetic stripe, EMV chip, or NFC chip to complete a credit card transaction.
      If the terminal can directly read a digital token, especially when the digital token adopts a digital signature technology, this terminal verifies the digital token's authenticity and integrity, and its association with the user via the Internet, and reads contents of the digital token.
   (7) A backend infrastructure provides verification services for terminals.
      For a terminal equipment for traditional credit cards, such infrastructure is a backend infrastructure for a traditional credit card system.
      For a digital token digitally signed, such infrastructure is one based on PKI.
   (8) The user is granted appropriate permissions and/or privileges after the digital token verification passes. In a credit card transaction, this authorizes the user to pay using the credit card.
      In the above scenario, if the terminal is compatible with the digital token so that the terminal can read the digital token directly from the mobile device, and the software and hardware of the mobile device can ensure security so that at a given time only one digital token can be accessed by the terminal, such agent card may be removed from this system. The removal of the agent card turns the said mobile app into a digital wallet similar to Google Wallet.
2. No matter whether an agent card is used, the digital token of a credit card (or its associated temporary digital token) stored in the mobile device may be used for payment for mobile apps on the mobile device. Based on this, described below is a kind of cartless shopping process with delivery to a customer's vehicle parked in the parking lot, which vehicle, for example, is controlled by a wireless digital key.
   (1) A customer parks their vehicle in the parking lot of a store, opens the cartless shopping mobile app, uses the location service based on Wi-Fi or GPS on the mobile device to locate the current store, and checks in the store's mobile Internet shopping service in the mobile app. Such service may be but is not limited to a mobile web app or a mobile app. Or the customer may use the mobile web app or mobile app provided by the current store.
   (2) The customer uses an "indoor navigation" system. The customer enters an item's key word or item number, or upload a picture of the item, and the mobile app promptly provides the indoor location information, such as aisle/bay/shelf number, and also gives visualized "indoor navigation map" information to visualize the customer's current location, the location of the destination item, and the (best) route to get there.
   (3) The customer experiences items in the store's showroom and uses the mobile device to scan the tag/label of any item they want to purchase or scan the item itself using an obj ect recognition technology.
      The customer may see the inventory status of each item in the store, and may specify the quantity (or weight) of each item to be purchased. If the store does not have enough stock of a certain item, the customer may choose the identical item(s) in one or more nearby stores and decide whether to pick up the item(s) or have the item(s) delivered.
      In the said cartless shopping mobile app, the customer may browse online reviews for any product, search and apply online discounts or coupons, search and request price match, etc. If the price match request cannot be accepted by the store, the mobile app may conduct a cost estimate for the customer to decide whether or not to purchase such items in the store, via any of methods including but not limited to the following.
      (A) If a lower price is found in a nearby store, the mobile apps estimates the driving distance via the location service based on GPS on the mobile device, with the real-time gas price, to estimate the extra cost to drive to the nearby store.
      (B) A cost estimation model calculates the extra cost of waiting time for shopping an identical item online at a lower price.

      The customer may specify for each item whether it is to be delivered to the customer's vehicle, or the customer's home, or as a gift to another person's home.
   (4) The customer pays for the items using a digital wallet based on existing technologies or the above digital token system, and obtains a corresponding electronic receipt. The electronic receipt is a digital token issued by the store.
   (5) If the customer requires items to be delivered to their vehicle in the parking lot, the customer sends the information about their vehicle parking location to the store. The vehicle location information may be obtained by any of the following methods: a parking lot location system (such as GPS parking location service); the store assigns a number to each parking space (similar to an airport parking numbering system) and the customer enters their parking number on their own in the mobile app; the customer enters their license plate number and it is scanned by a video monitor system to determine the vehicle location; the customer sends the locker number of the locker where the customer stores their vehicle key to the store, which locker number t corresponds to the parking space number. At the same time the customer sends a temporarily authorized digital token to access their vehicle to the store so as for the delivery person to open the vehicle truck and/or compartment.
   (6) The said payment information is sent to the store and store workers prepare items in the warehouse.
   (7) A delivery person delivers the items to the parking space, and uses the above mentioned temporary digital token to access the vehicle truck and/or compartment to put in the items.
   (8) The store pushes a delivery notification to the customer through the mobile app. Upon this notification being received, the said temporary digital token to access the vehicle automatically expires.
   (9) The customer returns to the parking space and drives away.

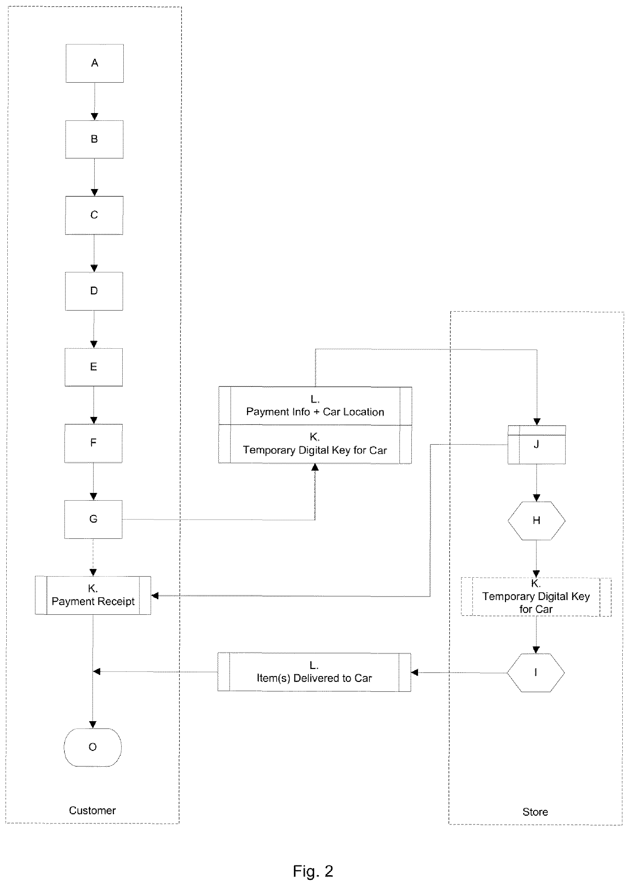

Figure 2, based on Figure 1, depicts the main process flow of the cartless shopping process where items are delivered to a wireless digital key controlled vehicle.

### EMBODIMENTS OF THE INVENTION

The implementation of the invention is discussed in details below using specific embodiments.
1. First, the digitalization of a financial/bank card (a credit card is used in the example below but the process applies to other types of financial/bank cards too) is used to show the production, issuance and use of a digital token.
   (1) A user makes a credit card application to a financial institution. The financial institution checks the user's credit record and other personal information to determine whether to approve the application.
   (2) If the said application is approved, the financial institution encapsulates the information corresponding to that stored on a traditional physical card (including the digital photo of the signature and the digital images of both sides of the card) into an electronic package, called a digital token of the credit card.
      Preferably, the financial institution may digitally sign the digital token. The digital signature may but not necessarily be based on PKI. The digital token digitally signed may also contain additional information including but not limited to: the user's digital photo, and other digitalized biometric identifications, including but not limited to fingerprint, voiceprint, iris scanning, and retinal scanning, etc.
   (3) The financial institution provides further encryption to the digital token, and transmits the digital token to a storage space accessible by the user via a method including but not limited to sending it to the user's email address or pushing the digital token to the user's mobile device. The user is notified of the password for decryption by a method including but not limited to SMS text or phone. After retrieving the electronic package, the user decrypts the package to restore the said digital token and stores the token on their mobile device.
      Or, the financial institution may store the digital token onto its own secured server(s), and notify the user of the download link and password via one of ways including but not limited to email, instant message, SMS text or phone, for the user to download the digital token into their mobile device.
      The said digital token may be activated by a traditional method such as phone or SMS text, or from the mobile app.
   (4) Repeating the above steps (1) to (3), the user may store multiple digital tokens from the same or different financial institutions into the same mobile device.
      The mobile device is connected to one or more external Clouds to implement export to Cloud, import from Cloud, backup to Cloud, restore from Cloud, and other functions for part or all of the digital tokens.
      The mobile device should store the digital tokens with encryption. Each of the digital tokens may be encrypted in categories or in layers or a combination of both, according to certain criteria including but not limited to the frequency of use. Encryption in categories is to attribute the digital tokens into different categories and encrypt each category individually. Encryption in layers is to implement encryption in two layers or more, and digital tokens are located in different encrypted layers, with the most frequently used digital tokens in the top encrypted layer. If the user uses their own private key for the encryption, the private key should get additional protection or be placed in an external Cloud, or preferably be placed on a separate smart card.
      One of the ideal forms of the mobile device is a smart phone. The smart phones manage digital tokens through the mobile app. Accessing the digital tokens requires password or fingerprint authentication.
      For any user without a smart phone, a mobile device designed specifically for storing and managing digital tokens may be adopted (the nature of such a device can be understood as a simplified smart phone with only one mobile app). The form of such mobile device may be flexible, and one form may be a companion card of the agent card (described below), i.e., the mobile device is the case of the agent card. The companion card is a card slightly bigger than the agent card, with a card slot to store the agent card. The companion card has a display screen to display all information on a digital token corresponding to a traditional physical card. The input interface may be a touch screen, or a traditional numeric keypad to simplify design and save cost. Each digital token can be transmitted to the companion card using a specific accessory from personal computer's Operating System (OS), including but not limited to a Windows platform. When the agent card is contained inside, the companion card may be activated by PIN or the user's fingerprint (as described below, the companion card cannot be activated without the agent card).
      The user may choose to have both a smart phone and a companion card, and the digital tokens on the smart phone and the companion card can be synchronized by a wire or wireless connection.
   (5) The agent card may receive a digital token from the above mentioned mobile device at a given time.
      The agent card is a credit card sized card of 85.60mm × 53.98mm compliant to ISO/IEC 7810 Id-1 standard.
      The agent card has a temporary information receipt and storage unit, a write-back unit, a dynamically writable magnetic stripe, a dynamically writable EMV chip, a dynamically writable NFC chip, etc. The temporary information receipt and storage unit may but not necessarily be realized by an NFC tag.
      When an operation similar to using a traditional credit card is required, the mobile app transmits a digital token to the temporary information receipt and storage unit on the agent card through a wireless technology including but not limited to NFC, and the contents of the digital token are dynamically written to the magnetic stripe, the EMV chip, and/or the NFC chip, corresponding to a traditional credit card. Then the information in the temporary storage unit is erased. If the temporary storage unit uses a NFC tag, it may be designed to merge with the NFC chip corresponding to that on a credit card.
      The power to operate dynamic writing on the agent card is provided by the mobile device via a wire or wireless connection. If powering from the mobile device is not feasible for the moment, the battery on the agent card should be rechargeable or replaceable to save maintenance cost.
      Preferably, if the terminal equipment can directly read the digital token, especially when the digital token adopts a digital signature technology, then the contents of the digital token do not need to be written to the magnetic stripe, the EMV chip, and/or the NFC chip, but are kept in the information receipt and storage unit on the agent card. The purpose of keeping the said dynamically writable magnetic stripe, dynamically writable EMV chip, dynamically writable NFC chip, etc., is to provide compatibility with traditional terminal devices.
      The mobile app may set spending limits like per-transaction limit, daily (weekly, monthly, etc.) maximum number of transactions, daily (weekly, monthly, etc.) limit, etc.
      The agent card has two operating modes: "keep mode" and "forget mode."
      In the "keep mode," information received from the mobile device can remain on the agent card until the next rewrite. The mobile app on the mobile device has an option to set whether the agent card needs to be activated. If such option is checked, the agent card becomes inactive after a use, and needs to be activated from the mobile device before the next use. A preferable design is: when the mobile device is a companion card, after the companion card is activated by inputting PIN or verifying the user's fingerprint, removing the agent card from the companion card automatically triggers the activation of the agent card; when the mobile device is a smart phone, a specially designed protective case for the smart phone may have an extra card slot at the back to contain the agent card, and as such, the mechanism of triggering the agent card from the companion card may be used for the smart phone too.
      In the "forget mode," the information is erased after timeout or a limited number of usages (for example, one time). The setting of timeout and the number of usage may be set on the mobile device. In the "forget mode," the agent card has to be initiated from the mobile device and receive digital tokens from the mobile device for the agent card to be used.
      If the agent card does not have write-back data, optionally, once the agent card is activated, the mobile device activates a timer. Before the timer goes off, the agent card must back-tap the mobile device to get deactivated; otherwise the alarm is triggered to warn the user of the potential loss of the agent card.
      If the terminal equipment (as described below) has a write-back operation, the write-back data are stored in the write-back unit on the agent card. The agent card has to back-tap the mobile device in order to synchronize the data back to the mobile device, and then the write-back data are erased from the write-back unit on the agent card and the agent card is subsequently deactivated.
      Putting the agent card back to the card slot on the companion card, or the card slot on the case for the smart phone, may automatically trigger the write-back and removal of data from the write-back unit (if there are write-back data) and the agent card is then deactivated.
      If the mobile device has any digital token that supports write-back, preferably, the mobile device should be connected to an external Cloud. When write-back data are synchronized back to the mobile device from the agent card, the mobile device further synchronizes the data into the external Cloud. If the mobile device is lost, the write-back digital token may be restored from the Cloud. If the mobile device is lost and the back-writeable digital token was not synchronized in the Cloud, one of the two methods should be adopted.
      (A) If the mobile Internet connection on the mobile device still works, the user may attempt to copy the digital tokens remotely from the mobile device and erase the data from the mobile device.
      (B) If the mobile Internet connection on the mobile device is no longer working, the user should report loss of the digital tokens and apply for new digital tokens.

      The agent card may have a "cache" mode, that is, the agent card can store the information of two or more digital tokens and only use the information of one digital token at a given time. One preferable design is: the agent card has a Duality mode, i.e., a separate set of dynamically writable magnetic stripe, dynamically writable EMV chip and dynamically writable NFC chip is located at different locations on each side of the agent card, so that the information of the digital tokens corresponding to two credit cards can be stored.
      The user may have one or more additional agent cards as backup(s) in case the original card is lost.
      Generally, the mobile app to manage the digital tokens on the mobile device shall be paired with the agent card, thus each being the other's start key. If one cannot detect the other, neither can be used individually. This way, the loss of one of these two does not cause any security breach.
      The only exception is that a deactivated agent card in the "keep mode" may be used separately (the mobile app still needs the agent card as the start key). If the agent card is lost, it should be replaced in a timely manner, and the digital tokens on the agent card should be reported loss and replaced.
      If the mobile device and the agent card are both lost, the security is guaranteed by the following mechanisms.
      (A) If the mobile device is a smart phone, many OS-level and app-level security measures may be adopted. Please refer to relevant literature.
      (B) If the mobile device is a companion card described above, security mechanism for a single electronic device may be adopted. Please refer to relevant literature, and some examples are as follows.
         (a) If wrong PIN is entered for a certain number of times (for example, three times), the companion card is locked. Optionally, the data on the companion card may be automatically erased.
         (b) Based on the user's usage frequency, a timeout mechanism for the companion card may be set. During this period if the companion card is not normally used, it is automatically locked. Optionally, the data on the card may be automatically erased.
      (C) If the mobile device is connected to the Internet, the user may remotely lock the mobile device via the Internet and remotely erase the data.
   (6) A terminal equipment verifies the digital token.
      A traditional credit card terminal equipment can read magnetic stripe, EMV chip, or NFC chip on the agent card to complete a credit card transaction.
      If the terminal can directly read a digital token, especially when the digital token adopts a digital signature technology, this terminal verifies the digital token's authenticity, integrity and its association with the user, and reads the contents of the digital token.
   (7) A backend infrastructure provides verification services for terminals.
      For a terminal equipment for traditional credit cards, such infrastructure is a backend infrastructure for a traditional credit system.
      For a digital token digitally signed, such infrastructure may but not necessarily be one based on PKI.
   (8) The user is granted appropriate permissions and/or privileges after the digital token verification passes. In a credit card transaction, this authorizes the user to pay using the credit card.
      In the above scenario, if the terminal is compatible with the digital token so that the terminal can read the digital token directly from the mobile device, and the software and hardware of the mobile device can ensure security that at a given time only one digital token can be accessed by the terminal, such agent card may be removed from the system. The removal of the agent card turns the said mobile app into a digital wallet similar to Google Wallet.
      In the said system, when a specific digital token is selected in the mobile device, the digital token may be used indirectly, and its re-encoded form is used instead, via any of methods including but not limited to the following.
      (A) The contents of the digital token may be encoded into a visual code such as a QR code.
      (B) The contents of the digital token may be hashed.
      (C) The contents of the digital token may be virtualized. For example, the original financial/bank card number, the expiration date, and the verification code may be replaced by a set of virtualized values.
      (D) The contents of the digital token may further be tokenized, i.e., the original digital token is replaced by another digital token with non-sensitive or less sensitive data.

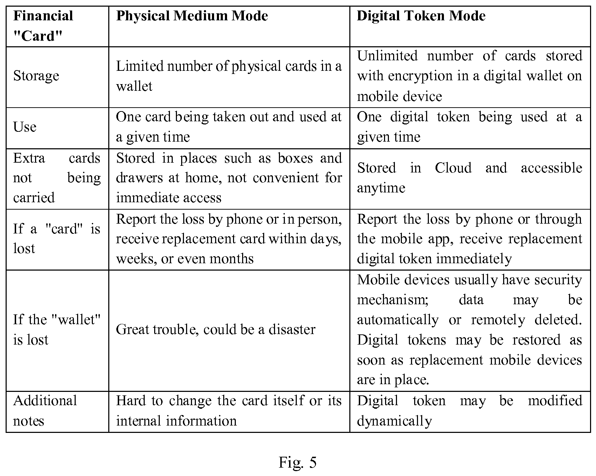

      The life span of the re-encoded form of the digital token should not be longer than that of the original digital token, and may be set to a definite time span or may expire after a limited number of uses (for example, one time). The re-encoded form may be changed if needed.
      The re-encoding of the said digital token can enhance the security of the digital token and can also make the digital token compatible with more terminal devices.
      The said method, using a credit card as an example, is also applicable to the digitalization, issuance and use of other financial/bank cards. The principle is applicable to the digitalization, issuance and use of other information-contained physical media. Figure 5 shows a comparison between a physical financial/bank card and a financial/bank card digitalized using this invention system.
2. The following describes the implementation of the digital token system in physical store optimization.
   The first way to optimize a physical store is distributive checkout.
   (1) A customer retrieves an item from a store shelf.
   (2) The customer scans the label of the item into the mobile app on the mobile device. The label may be but is not limited to UPC, QR Code, NFC tag, RFID, etc. The customer may browse the item's online review, search and apply discounts or coupons, search and request price match, etc. Or, the customer may scan the item directly into the mobile app using an object recognition technology.
   (3) Repeat the above steps (1) and (2) until the customer retrieves and scans all the items to be purchased. If needed, these items may be put into a shopping cart.
   (4) The customer uses a digital wallet technology based on existing technologies or the above digital token system to pay for the items through mobile apps and receives a corresponding electronic receipt. The electronic receipt is a digital token issued by the store.
   (5) The customer shows the receipt at the store exit to verify that the items purchased have been paid for.
      The verification of the electronic receipt may be semi-manual. An electronic receipt reader at the exit verifies the validity of the electronic receipt and displays an electronic or paper list of the purchased items to a store clerk, who then does a quick visual check on the items.
      Preferably, the said electronic receipt may be verified in an automatic manner. An electronic receipt reader at the store exit verifies the validity of the electronic receipt and visualizes the purchased items on a large screen at the exit (preferably, the large screen is visible to the public), i.e., the digital pictures of the items are displayed on the large screen. Stricter methods may be adopted including but not limited to: dividing the items into "weighable" and "non-weighable" and verifying the total weight of all weighable items while visualizing all non-weighable items on the large screen.

   The second way to optimize a physical store is cartless shopping.
   (1) A customer enters into a store, opens the cartless shopping mobile app, uses the location service based on Wi-Fi or GPS on the mobile device to locate the current store, and checks in the store's mobile Internet shopping service. Such service may be but is not limited to a mobile web app or a mobile app. Or the customer may use the mobile web app or mobile app provided by the current store.
   (2) Optionally, the customer may use an "indoor navigation" system. The customer enters an item's key word or item number, or upload a picture of the item, and the mobile app promptly provides the indoor location information, such as the aisle/bay/shelf number; ideally the mobile app gives visualized "indoor navigation map" information to visualize the customer's current location, the location of the destination item, and the (best) route to get there.
   (3) The customer experiences items in the store's showroom and uses the mobile device to scan the tag/label of any item they want to purchase or scan the item itself using an obj ect recognition technology.
      The customer may see the inventory status of each item in the store, and may specify the quantity (or weight) of each item to be purchased. If the store does not have enough stock of a certain item, the customer may choose the identical item(s) in one or more nearby stores and decide whether to pick up the item(s) or have the item(s) delivered.
      In the said cartless shopping mobile app, the customer may browse online reviews for any product, search and apply online discounts or coupons, search and request price match, etc. If the price match request cannot be accepted by the store, the mobile app may conduct a cost estimate for the customer to decide whether or not to purchase such items in the store, via any of methods including but not limited to the following.
      (A) If a lower price is found in a nearby store, the mobile apps estimates the driving distance via the location service based on GPS on the mobile device, with the real-time gas price, to estimate extra cost to drive to the nearby store.
      (B) A cost estimation model calculates the extra cost of waiting time for shopping an identical item online at a lower price.

      The customer may specify for each item whether it is to be delivered to the customer's vehicle, or the customer's home, or as a gift to other person's home.
   (4) The customer pays for the items using a digital wallet based on existing technologies or the said digital token system, and obtain a corresponding electronic receipt. The electronic receipt is a digital token issued by the store.
   (5) The store receives the customer's payment notification, and the store workers retrieve items from the warehouse. If applicable, they prepare items for a logistics delivery.
   (6) If no items are to be picked up at the store, the customer may leave the store. Otherwise, the customer may temporarily go away for dining, coffee, reading and other leisure activities, or continue to shop in nearby stores, or conduct other activities.
   (7) Once the said items to be picked up are ready, a message is pushed to the customer's mobile device notifying the customer that the items are prepared and showing the specific location to pick up the items. The location may be a labelled/numbered locker or a shopping cart at a specific location (the shopping cart may have an electronic label, which directly or indirectly corresponds to the electronic receipt and may have voice prompt and/or flashing signal). The store's order preparation should take as little time as possible, ideally five to ten minutes. The shipping notification for items to be delivered maybe sent separately.
   (8) The customer returns to the store's pickup area and picks up the items from the locker or uses the said electronic receipt to trigger the voice prompt or flashing signal of the electronic label to find the shopping cart. If the locker has an electronic lock, the said electronic receipt may be used as the electronic key to open the locker. To facilitate timely pickups, the store may offer incentives such as reward points to any customer who quickly retrieves their items. The number of points is associated with the pickup speed.
   (9) The customer leaves the store after retrieving the items.

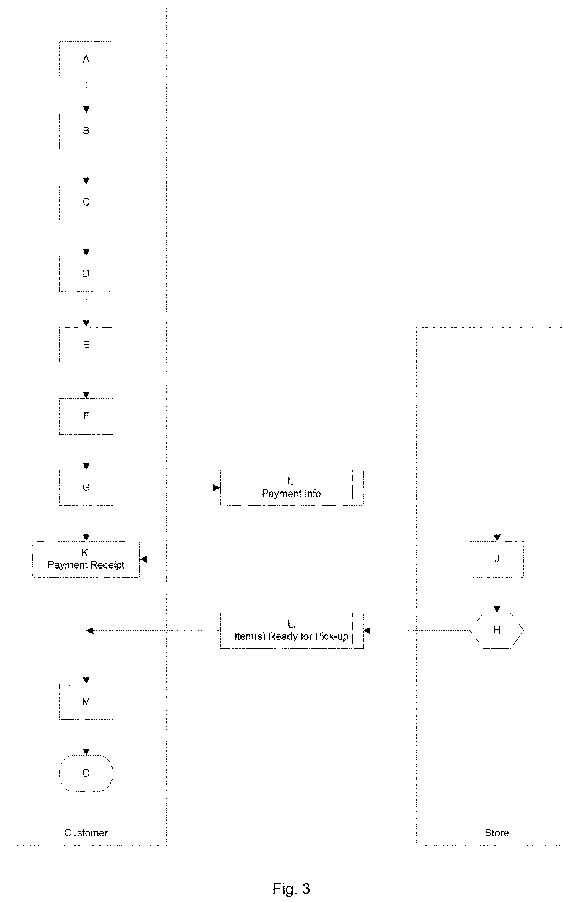

   Based on Figure 1, Figure 3 depicts the main flow of the said cartless shopping method.
   For a multiple-store configuration like a shopping mall or an outlet mall, shared lockers may be adopted to facilitate customers in retrieving at one location items purchased from several stores.
   For cartless shopping for multiple stores that are nearby, including but not limited to stores in a shopping mall or an outlet mall, the said cartless shopping mobile app may have a central management, including but not limited to: the customer may check the order preparation status of each store; only one final pickup notification is sent to the customer after all stores finish order preparations.
   Described below is a cartless shopping process based on delivery to a customer's vehicle parked in the parking lot, which vehicle, for example, is controlled by a traditional physical key.
   (1) A customer parks their vehicle in the parking lot of a store, opens the cartless shopping mobile app, uses the location service based on Wi-Fi or GPS on the mobile device to locate the current store, and checks in the store's mobile Internet shopping service. Such service may be but is not limited to a mobile web app or a mobile app. Or the customer may use the mobile web app or mobile app provided by the current store.
   (2) The customer puts the vehicle's key in a locker corresponding to the parking space, and the locker can be accessed by the customer and any store delivery person. The customer receives the digital token to open the locker through the mobile app.
   (3) Optionally, the customer may use an "indoor navigation" system. The customer enters an item's key word or item number, or upload a picture of the item, and the mobile app promptly provides the indoor location information, such as the aisle/bay/shelf number; ideally the mobile app gives visualized "indoor navigation map" information to visualize the customer's current location, the location of the destination item, and the (best) route to get there.
   (4) The customer experiences items in the store's showroom and uses the mobile device to scan the tag/label of any item they want to purchase or scan the item itself using an obj ect recognition technology.
      The customer may see the inventory status of each item in the store, and may specify the quantity (or weight) of each item to be purchased. If the store does not have enough stock of a certain item, the customer may choose the identical item(s) in one or more nearby stores and decide whether to pick up the item(s) or have the item(s) delivered.
      In the said cartless shopping mobile app, the customer may browse online reviews for any product, search and apply online discounts or coupons, search and request price match, etc. If the price match request cannot be accepted by the store, the mobile app may conduct a cost estimate for the customer to decide whether or not to purchase such items in the store, via any of methods including but not limited to the following.
      (A) If a lower price is found in a nearby store, the mobile apps estimates the driving distance via the location service based on GPS on the mobile device, with the real-time gas price, to estimate extra cost to drive to the nearby store.
      (B) A cost estimation model calculates the extra cost of waiting time for shopping an identical item online at a lower price.

      The customer may specify for each item whether it is to be delivered to the customer's vehicle, or the customer's home, or as a gift to other person's home.
   (5) The customer pays for the items using a digital wallet based on existing technologies or the said digital token system, and obtain a corresponding electronic receipt. The electronic receipt is a digital token issued by the store. The digital token may be linked to the digital token used to open the locker for the vehicle key.
   (6) If the customer requires items to be delivered to their vehicle in the parking lot, the customer sends the information about their vehicle parking location to the store. The vehicle location information may be obtained by any of the following methods: a parking lot location system (such as GPS parking location service); the store assigns a number to each parking space (similar to an airport parking numbering system) and the customer enters their parking number on their own in the mobile app; the customer enters their license plate number and it is scanned by a video monitor system to determine the vehicle location; the customer sends the locker number of the locker where the customer stores their vehicle key to the store, which locker number corresponds to the parking space number.
   (7) The said payment information is sent to the store and store workers prepare items in the warehouse.
   (8) The store processes the order. The store delivery person obtains the vehicle key to deliver the order to the vehicle trunk and/or compartment and returns the key to the original locker.
   (9) The store pushes the delivery notification to the customer through the mobile app.
   (10) The customer returns and retrieves the vehicle key from the locker using the digital token of the locker or of the electronic receipt, and drives away.

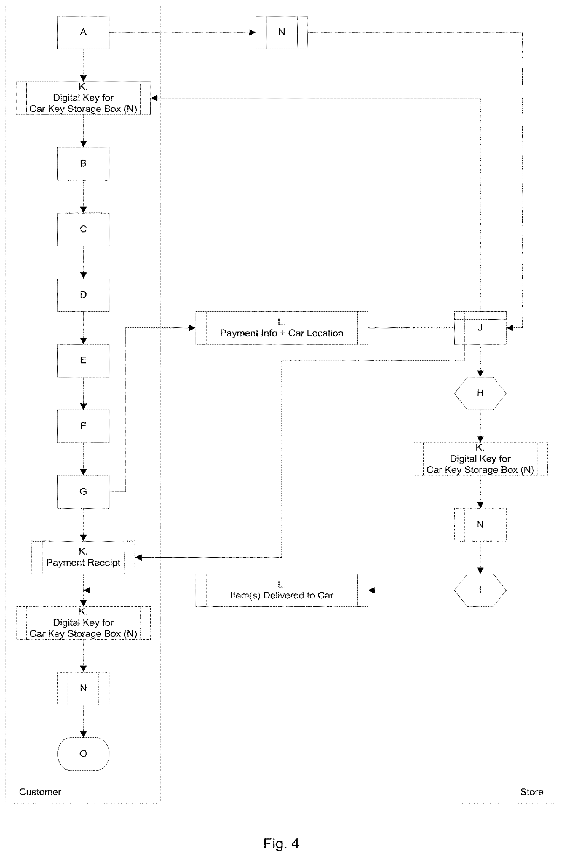

   Based on Figure 1, Figure 4 depicts the main process flow of the cartless shopping process described above, for a vehicle, for example, controlled by a traditional physical key.
3. The digital token system in this invention has a wide range of applications, including but not limited to:
   (1) Digital locks and their digital keys.
      (A) A user books and pays for a hotel room online, obtains the digital token issued by the hotel and store it in the mobile device. The user goes directly to the hotel room without checking in at the reception upon arrival, and opens the door after the said digital token is wirelessly sent to and verified by a token reader at the door.
      (B) Similarly, a user's home lock may be a digital lock wirelessly controlled by the user themselves. The user may send themselves or another person a digital token as the digital key to unlock the door.
      (C) For a vehicle wirelessly connected to the Internet, digital tokens may be used to control the lock(s) for vehicle doors and the trunk.

      In a digital lock system described above in (B) or (C), to achieve enhanced security, extra devices for security should be installed, such as a video monitor/record system, in order to monitor/record users of the digital lock and their behaviors.
   (2) Digital identities, such as aforementioned passports, driver's licenses, and any other identifications.
   (3) Digital credentials, such as digital financial/bank "cards," digital membership "cards," etc.

### INDUSTRIAL APPLICATION OF THE INVENTION

The digital token in the invention can achieve the digitalization of all information-contained physical media such as passports, identities, financial/bank cards, and membership cards, to reduce or eliminate the need to manufacture physical media, improve efficiency of issuance and usage, and greatly improve security and privacy. The digital token also applies to the digitalization of information that may be contained on physical media but does not exist currently. Similar to the way electronic communication such as electronic mail gradually replacing paper media and affecting the mail business, this invention will gradually replace the manufacture and issuance of the traditional physical documents and physical cards, have a disruptive effect on the business and efficiency of government agencies and financial institutions, and will also direct the research of computer security from hardware security to software security.

The cartless shopping method based on the digital token will maximize the advantage of offline physical stores and minimize their disadvantages, and to implement real integration of online and offline shopping. The cartless shopping method can co-exist with the current shopping method with shopping cart, and implement a gradual transition from shopping with cart to cartless shopping. The cartless shopping method is also applicable to turning existing warehouses or cargo centers into cartless shopping centers.

SEQUENCE LISTING

## Claims

1. A digital token system that provides digitalization for an information-contained physical medium, the system comprising:
(1) a user applying for a digital token to a registration of an issuing authority, the registration verifying the user's information;
(2) the issuing authority digitalizing the user's information and other relevant information after approving the user's application, and encapsulating such information into an electronic package called a digital token;
(3) the issuing authority sending the digital token to the user by electronic transmission such as through the Internet;
(4) the user storing one or multiple digital tokens from the same or different issuing authorities in a mobile device;
(5) optionally, an agent card receiving a digital token or its re-encoded form at a given time from the mobile device;
(6) a terminal verifying the digital token or its re-encoded form;
(7) a backend infrastructure providing verification services for the terminal; and
(8) the user being granted appropriate permissions and/or privileges once the digital token or its re-encoded form is verified;
optionally, the system being applied to physical store optimization to achieve the following:
(1) Distributive Checkouts; and
(2) Cartless Shopping.

2. The system of Claim 1 further comprising:
the issuing authority digitalizing the user's information and other relevant information corresponding to information contained in a traditional physical medium or information that could be contained in a physical medium, and encapsulating such information in an electronic package, called a digital token, which may be encrypted or non-encrypted.

3. The digital token of Claim 2 further comprising:
information corresponding to information printed on an information-contained physical medium, for an identity (including an identity card) said printed information including the user's name, date of birth, issuance date, expiration date, document (including card) number, etc., and for a financial/bank card said information including the user's name, card number, expiration date, verification codes, etc.;
optionally, digitalized information corresponding to the hidden information on the physical medium;
digital background images of the information-contained physical medium, the user's digital photo, digital image of signature, and other digitalized biometric identification, including but not limited to fingerprint, voiceprint, iris scanning, and retinal scanning, any of such information being optional;
optionally, the electronic simulation of the security mechanism on the information-contained physical medium including but not limited to digital fingerprint or digital watermark, said digital fingerprint optionally further being encrypted, encrypted or non-encrypted digital fingerprints optionally being distributed at different locations in the electronic package, encrypted digital fingerprint also optionally being nested, that is, an encrypted portion containing other encrypted portions, and the electronic package itself optionally also being encrypted; and
optionally, digital signature being used to implement the authenticity, integrity and non-repudiation of the digital token.

4. The system of Claim 1 further comprising:
the issuing authority sending the digital token to the user by electronic transmission, wired or wireless or a combination of both (for example, transmission over the Internet), said electronic transmission being achieved with encryption or without encryption, and the electronic transmission being done by push or pull or a combination of both.

5. The digital token as recited in Claims 2, 3, and 4 optionally further including its re-encoded form:
(1) the contents of the digital token being encoded into a visual code such as a QR code;
(2) the contents of the digital token being hashed;
(3) the contents of the digital token being virtualized, for example, the original financial/bank card number, expiration date, and verification code being substituted with a set of virtualized values; or
(4) the contents of the digital token further being tokenized, i.e., the original digital token with a digital token being substituted with non-sensitive or less sensitive data;
the life span of the re-encoded form of the digital token generally not being longer than that of the original digital token, and optionally being set to a definite time span or expiring after a limited number of uses (for example, one time);
the re-encoding optionally being changed if needed.

6. The digital token of Claims 2, 3, and 4, and its re-encoded form of Claim 5, which further can be transmitted electronically for example through the Internet to a trusted terminal for verification to obtain appropriate permission(s) and/or privilege(s).

7. The digital token system of Claim 1 further comprising:
the user storing one or multiple digital tokens from the same or different issuing authorities in the mobile device, the mobile device managing the digital token(s) using its mobile apps.

8. The mobile device and its mobile apps of Claim 7 further comprising:
The mobile device storing one or more digital tokens with encryption, each of the digital tokens being encrypted in layers or categories or a combination of layers and categories, according to certain criteria including but not limited to frequency of use; if the user uses their own private key for the encryption, the private key getting additional protection such as static password or being placed in the external Cloud, or being placed on a separate smart card;
optionally, the mobile device being connected to one or more external Clouds to achieve the export or removal of the digital token(s) from the mobile device, as well as importing from the Cloud, in order to achieve additional security; optionally, all or partial digital token(s) in the mobile device also having backup in the external Cloud; if mobile Internet technologies can guarantee the availability of network connection and Cloud, all digital token(s) being stored in the Cloud and any digital token being used on demand;
preferably, the mobile device or terminal device visualizing the contents of any digital token and displaying the contents on the screen or generate a digital file (such as a digital image or a pdf file) to simulate the visual appearance of the corresponding physical medium containing information, for visual inspection, or for copying or printing purposes; optionally, the digital file using one or more additional technical methods to achieve authenticity, integrity and non-repudiation including but not limited to the user's digital signature or digital stamp or both;
preferably, the mobile device using security mechanism such as PIN or fingerprint recognition to authorize access to the digital token(s);
if the mobile device has any back-writeable digital token, preferably, the mobile device being connected to an external Cloud so that when the write-back data are synchronized with the mobile device, the mobile device further synchronizing the data to the Cloud.

9. The mobile device and mobile apps as recited in Claims 7 and 8, further **characterized in that**:
if the user uses their own private key for the encryption of any digital token, the private key getting additional protection such as static password or being placed in the external Cloud, or being placed on separate smart cards.

10. The mobile device and mobile apps as recited in Claims 7 and 8, further **characterized in that**:
the mobile device or compatible terminal device visualizing the contents of any digital token and displaying the contents on the screen or generating a digital file (such as a digital image or a pdf file) to simulate the visual appearance of the corresponding information-contained physical medium, for visual inspection, or for copying or printing purposes;
optionally, the digital file using one or more additional technical methods to achieve its authenticity, integrity and non-repudiation including but not limited to the user's digital signature or digital stamp or both.

11. The system of Claim 1 further comprising:
the user using an agent card to receive a digital token or its re-encoded form from the digital device at a given time;
the contents of the digital token or its re-encoded form being dynamically written into the corresponding storage unit compatible with the terminal device so that the terminal device can read the digital token for verification purpose;
the said agent card having a temporary write-back storage unit to receive write-back data from the terminal when needed and to synchronize the data to the mobile device; when the agent card is near the mobile device, the temporary write-back data being written back via wire or wireless connection to the mobile device and such data then being erased from the temporary storage unit of the agent card;
the digital token on the agent card optionally being directly read by a compatible terminal device and the write-back data being synchronized back when necessary;
such agent card being connected to the said mobile device through wire or wireless connection when receiving digital token (or its re-encoded form), and the wireless connection optionally being but not necessarily being NFC;
the size of the agent card being flexible as long as the size matches the corresponding reading terminal;
if the compatible terminal can read the digital token (or its re-encoded form) directly from the mobile device, and the hardware and software security measures on the mobile device can ensure that at a given time only one digital token (or its re-encoded form) chosen by the user can be accessed by the terminal, the agent card becoming optional.

12. A companion card, comprising:
the companion card being a mobile device designed specifically for storing and managing digital token(s);
the companion card being the case of an agent card, and being a card slightly bigger than the agent card, with card slots to store the agent card;
the companion card also having a display screen to display all information of the digital token corresponding to a traditional physical card; the input interface being a touch screen, or a traditional numeric keypad;
each digital token being transmitted to the companion card using a specific accessory from the operating system on the user's computer, including but not limited to a Windows operating system;
when using an internal agent card, the companion card being activated by PIN or by verifying the user's fingerprint;
the user optionally choosing to have both the smart phone and the companion card to store and manage digital token(s), and the digital token(s) on the smart phone and on the companion card being synchronized by wire or wireless connection.

13. An agent card, comprising:
the agent card being a credit card sized card of 85.60mm × 53.98mm compliant to the ISO / IEC 7810 Id-1 standard;
the agent card having a temporary information receipt and storage unit, a write-back unit, a dynamically writable magnetic stripe, a dynamically writable EMV chip, a dynamically writable NFC chip, etc.; the information receipt and storage unit optionally being but not necessarily being realized by an NFC tag;
when an operation similar to using a traditional credit card is required, the mobile app transmitting a digital token (or its re-encoded form) to the temporary information receipt and storage unit on the agent card through a wireless technology including but not limited to NFC, and the contents of the digital token being dynamically written to the magnetic stripe, the EMV chip, and/or the NFC chip corresponding to the NFC chip on a traditional credit card; then the information in the temporary storage unit being erased; if the temporary unit uses an NFC tag, the said NFC tag optionally being designed together with the NFC chip corresponding to the NFC chip on a credit card;
the power to operate the agent card dynamic writing being provided by the mobile device via wire or wireless connection; if powering from the mobile device is not feasible due to the limitation of current technologies, the battery on the agent card being rechargeable or replaceable;
preferably, if the terminal equipment can directly read digital token (or its re-encoded form), especially when the digital token (or its re-encoded form) adopts a digital signature technology, the digital token (or its re-encoded form) being kept in the information receipt and storage unit on the agent card to be read by the terminal device;
the agent card through mobile app optionally setting the spending limit per transaction, daily (weekly, monthly, etc.) maximum number of transactions, daily (weekly, monthly, etc.) spending limit, etc.;
the agent card having two operating modes: "keep mode" and "forget mode;"
in the "keep mode," information received from the mobile device being kept on the agent card until next rewrite; the mobile app on the mobile device having an option to set whether the agent card needs to be activated; if such option is checked, the agent card becoming inactive after use, needing to be activated before next use from the mobile device; a preferable design being as follows: when the mobile device is a companion card, after the companion card is activated by inputting PIN or verifying the user's fingerprint, removing the agent card from the companion card automatically triggering the activation of the agent card; when the mobile device is a smart phone, a specially designed protective case for the smart phone having an extra card slot at the back for the agent card, and as such, the mechanism of triggering the agent card on the companion card being used for the smart phone;
in the "forget mode," the information being erased after timeout or a limited number of uses (for example, one time); the setting of timeout and the number of usages being set on the mobile device; in the "forget mode," the agent card mandatorily being started from the mobile device and receiving a digital token from the mobile device for the said digital token to be used;
if the agent card does not have write-back data, one option being that once the agent card is activated, the mobile device activates a timer; before the timer goes off, the agent card mandatorily back-tapping the mobile device to get deactivated; otherwise the alarm triggering to warn the user of the potential loss of the agent card;
putting the agent card back into the card slot on the companion card, or back to the card slot on the case of the smart phone, triggering the synchronization of write-back data on the agent card as well as removal of information from the write-back unit (if there are write-back data), and then the agent card being deactivated;
if the terminal performs a write-back operation, such data being stored in the write-back unit on the agent card; the agent card having to back-tap the mobile device in order to synchronize the data to the mobile device, and then the write-back data being erased from the write-back unit on the agent card and the agent card being subsequently deactivated;
the agent card optionally having a "cache" mode, that is, the agent card optionally storing the information of two or more digital tokens and only using the information of one digital token at a given time; one preferable design being that the agent card has a Duality mode, i.e., a separate set of a dynamically writable magnetic stripe, a dynamically writable EMV chip and a dynamically writable NFC chip being located at different locations of each side of the agent card, so that the information of the digital tokens corresponding to two financial/bank cards can be stored;
generally the mobile app to manage the digital token(s) on the mobile device mandatorily being paired with the agent card, thus each being the other's start key; if one cannot detect the other, neither being used individually; thus, the loss of one of these two items not causing any security breach; the only exception being that a deactivated agent card in the "keep mode" can be used separately (the mobile app still needing the agent card as key); if the agent card is lost, the agent card being replaced in a timely manner, and the digital token(s) on the agent card being reported loss and replaced too.

14. The agent card of Claim 13, wherein,
the agent card has a temporary information receipt and storage unit, a write-back unit, a dynamically writable magnetic stripe, a dynamically writable EMV chip, a dynamically writable NFC chip, etc.; the information receipt and storage unit may but not necessarily be realized by an NFC tag;
when an operation similar to using a traditional credit card is required, the mobile app transmits a digital token (or its re-encoded form) to the temporary information receipt and storage unit on the agent card through a wireless technology including but not limited to NFC, and the contents of the digital token are dynamically written to the magnetic stripe, the EMV chip, and/or the NFC chip corresponding to the NFC chip on a traditional credit card; then the information in the temporary storage unit is erased; if the temporary unit uses an NFC tag, the said NFC tag being designed together with the NFC chip corresponding to the NFC chip on a traditional credit card;
the power to operate the agent card dynamic writing is provided by the mobile device via wire or wireless connection; if powering from the mobile device is not feasible due to the limitation of current technologies, the battery on the agent card should be rechargeable or replaceable;
preferably, if the terminal equipment can directly read the digital token (or its re-encoded form), especially when the digital token (or its re-encoded form) adopts a digital signature technology, the digital token (or its re-encoded form) can be kept in the information receipt and storage unit on the agent card to be read by a terminal device.

15. The agent card of Claim 13, the agent card having two operating modes: "keep mode" and "forget mode," wherein,
in the "keep mode," information received from the mobile device can be kept on the agent card until next rewrite;
in the "forget mode," the information is erased after timeout or a limited number of usages (for example, one time); optionally, the setting of timeout and the number of usages may be set on the mobile device; in the "forget mode," the agent card has to be started from the mobile device and receive a digital token from the mobile device for the said digital token to be used.

16. The agent card of Claim 13, the agent card requiring activation, wherein:
if the activation option is checked, the agent card becomes inactive after use, and needs to be activated before next use from the mobile device;
a preferable design is: when the mobile device is a companion card, after the companion card is activated by inputting PIN or verifying the user's fingerprint, removing the agent card from the companion card automatically triggers the activation of the agent card; when the mobile device is a smart phone, a specially designed protective case for the smart phone may have an extra card slot at the back for the agent card, and as such, the mechanism of triggering the agent card on the companion card may be used for the smart phone;
if the agent card does not have write-back data, one option may be that once the agent card is activated, the mobile device activates a timer; before the time goes off, the agent card must back-tap the mobile device to get deactivated; otherwise the alarm triggers to warn the user of the potential loss of the agent card;
putting the agent card back into the card slot on the companion card, or back to the card slot on the case of the smart phone, can trigger the synchronization of write-back data on the agent card as well as removal of information from the write-back unit (if there are write-back data), and then the agent card is deactivated;
if the terminal performs a write-back operation, such data are stored in the write-back unit on the agent card; the agent card has to back-tap the mobile device in order to synchronize the data with the mobile device, and then the write-back data are erased from the write-back unit on the agent card and the agent card is subsequently deactivated.

17. The agent card of Claim 13, the agent card having a "cache" mode, wherein,
the agent card can store the information of two or more digital tokens and only use the information of one digital token at a given time;
one preferable design is: the agent card has a Duality mode, i.e., a separate set of a dynamically writable magnetic stripe, a dynamically writable EMV chip and a dynamically writable NFC chip is located at different locations of each side of the agent card, so that the information of the digital tokens corresponding to two financial/bank cards can be stored.

18. The agent card of Claim 13, wherein,
generally, the mobile app to manage the digital token(s) on the mobile device must be paired with the agent card, thus each being the other's start key; if one cannot detect the other, then neither can be used individually; thus, the loss of one of these two items does not cause any security breach;
the only exception is that a deactivated agent card in the "keep mode" can be used separately (the mobile app still needs the agent card as key); if the agent card is lost, the agent card is replaced in a timely fashion, and the digital token(s) on the agent card are reported loss and replaced too.

19. The system of Claim 1, further comprising:
the terminal device verifying the digital token, and if verification passes, the user being granted appropriate permission(s) and/or privilege(s);
optionally, such terminal issuing another digital token (or its re-encoded form) authorizing appropriate permission(s) and/or privilege(s) to the digital token (or its re-encoded form) that is read from an agent card or the mobile device or is sent remotely;
optionally, the digital token (or its re-encoded form) issued by the terminal being derived from the original digital token or its re-encoded form;
optionally, the digital token (or its re-encoded form) being attached to the original digital token (or its re-encoded form).

20. The system of Claim 1, further comprising:
the digital token(s) of the said system being stored on the secure server of the authority (issuing authority) or other designated service providers (this "secure server" being centralized or decentralized; being multi-layered or nested; or a combination of both (being centralized/decentralized + being layered/nested)), and the user only obtaining its re-encoded form such as a tokenized form as the index of the real token; when a third party obtains permission(s) and/or privilege(s), the said third party retrieving the real token or its re-encoded form from the secure server by the index/tokenized form.

21. A distributive checkout method for a physical store comprising:
(1) a customer retrieving an item from the store shelf;
(2) the customer scanning the label of the item into a mobile app on a mobile device; the customer optionally browsing the item's online review, searching and applying discounts or coupons, searching and requesting price match, etc.;
(3) repeating the above steps a) and b) until the customer retrieves and scans all the items to be purchased; if needed, these items being put into a shopping cart;
(4) the customer paying for the item using digital wallet based on existing technologies or a digital token system through the mobile apps and receiving the corresponding electronic receipt; the electronic receipt being a digital token issued by the store;
(5) the customer showing the receipt at store exit to verify that the items purchased have been paid for;
the verification of the electronic receipt optionally being semi-manual, that is, verification being done first by the electronic receipt reader that verifies the validity of the electronic receipt and displays the list of items purchased to the store clerk, who then does a quick visual check on the items;
preferably, automatic check being used for verification; the electronic receipt reader at the store exit verifying the validity of the electronic receipt and visualizing the items on a large screen at exit (preferably, the large screen being visible to the public), i.e., the digital pictures of the items being displayed on the large screen; a stricter method optionally being adopted including but not limited to: dividing the items into categories of "weighable" and "non-weighable" and verifying the total weight of all weighable items while visualizing all non-weighable items on the large screen.

22. The distributive checkout method of Claim 21, further comprising:
the electronic receipt optionally being verified automatically;
an electronic receipt reader at the store exit verifying the validity of the electronic receipt and visualizing the items on the large screen at the exit (preferably, the large screen being visible to the public), i.e., the digital pictures of the items being displayed on the large screen;
a stricter method optionally being adopted including but not limited to: dividing the items into categories of "weighable" and "non-weighable" and verifying the total weight of all weighable items while visualizing all non-weighable items on the large screen.

23. A cartless shopping method for physical stores comprising:
(1) A customer entering into a store, opening the cartless shopping mobile app, using the location service, for example, based on Wi-Fi or GPS, on the mobile device to locate the current store, and checking in the mobile Internet shopping service in the mobile app; such service optionally being but not limited to a mobile web app or a mobile app; or the customer using the mobile web app or mobile app provided by the current store;
(2) optionally, the customer using an "indoor navigation" system - the customer entering an item's key word or item number, or uploading a picture of the item, and the mobile app promptly providing the indoor location information, such as the aisle/bay/shelf number; ideally the mobile app giving visual "indoor navigation map" information to visualize the customer's current location, the item's destination location, and the (best) route to get to the destination;
(3) the customer experiencing items in the store's showroom and using the mobile device to scan the label/tag of any item they want to purchase or to scan the item itself using an object recognition technology, wherein,
the customer may see the inventory status of each item in the store, and may specify the quantity (or weight) of each item to be purchased; if the store does not have enough stock of a certain item, the customer may choose a nearby store and decide whether to pick up the items or have the items delivered;
in the cartless shopping mobile app, the customer may browse online product reviews, search and apply online discounts or coupons, search and request price match, etc.; if the price match request cannot be accepted by the store, the mobile app may conduct cost estimate for the customer to decide whether or not to purchase such items in the store via any of methods including but not limited to the following;
(A) if a lower price is found in a nearby store, the location service based on GPS on the mobile device provides an estimated extra cost to drive to the other store based on distance and gas price;
(B) a cost estimate model to calculate the time cost to purchase such item online at a lower price;
the customer may specify for each item whether the item is to be delivered to the customer's vehicle, or the customer's home, or as a gift to other person's home;
(4) the customer paying for the items using a digital wallet based on existing technologies or a digital token system and obtaining the corresponding electronic receipt, the electronic receipt being regarded as a digital token issued by the store;
(5) the store receiving the customer's payment notification, and the store clerk(s) retrieving items from the store's warehouse / storage room for the customer's pickup, and preparing items for delivery if applicable;
(6) if there are no items to be picked up, the customer leaving the store directly; otherwise, the customer going away temporarily (for dining, coffee, reading and other leisure activities), or continuing to shop in nearby shops, or conducting other activities;
(7) once the items are ready, a message being pushed to the customer's mobile device notifying the customer that the items are prepared and showing the location to pick up the items; the location optionally being a labelled/numbered locker or a shopping cart at a specific location (the shopping cart optionally having an electronic label that directly or indirectly corresponds to the electronic receipt with a voice prompt or flashing signal); the store's order preparation time being as short as possible, ideally five to ten minutes; the delivery notification for items to be delivered optionally being sent separately;
(8) the customer returning to the pickup area and picking up the items from the locker or using the electronic receipt to trigger the voice prompt or flashing signal of the electronic label to find the shopping cart; if the locker has an electronic lock, the electronic receipt optionally being used as the electronic key to the locker; to facilitate timely pickup, the store optionally offering incentives to any customer who retrieves their items quickly, such as reward points - the number of points being associated with the pickup speed;
(9) the customer leaving the store after retrieving the items.

24. The cartless shopping method of Claim 23, further comprising:
the cartless shopping mobile app locating the current store using a location service, for instance, based on Wi-Fi or GPS;
the customer checking into the mobile Internet shopping service for the store in the mobile app.

25. The cartless shopping method of Claim 23, further comprising:
an "indoor navigation" system: the customer entering an item's key word or item number, or uploading a picture of the item, and the mobile app promptly providing the indoor location information, such as the aisle/bay/shelf number; ideally the mobile app giving visual "indoor navigation map" information to visualize the customer's current location, the item's destination location, and the (best) route to get to the destination.

26. The cartless shopping method of Claim 23, further comprising:
the cartless shopping mobile app conducting an automatic cost estimate on the items that may be purchased elsewhere, via a method including but not limited to the following:
(A) the location service based on GPS on the mobile device providing an estimated extra cost to drive to the other store based on distance and gas price; or
(B) a cost estimate model to calculate the time cost to purchase such item online at a lower price.

27. The cartless shopping method of Claim 23, further comprising:
the items prepared by warehouse being placed into a shopping cart at a specific location that optionally has an electronic label directly or indirectly corresponding to the electronic receipt with a voice prompt or flashing signal;
when the customer comes to pick up the items, the customer using the electronic receipt to trigger the voice prompt or flashing signal of the electronic label to find the shopping cart.

28. The cartless shopping method of Claim 23, further comprising:
to facilitate timely pick up, the store offering incentives to any customer who retrieves their items quickly, such as reward points;
the number of rebate points optionally being associated with the pickup speed.

29. The cartless shopping method of Claim 23, further comprising:
shared lockers by multiple stores being placed in a shopping mall or an outlet mall to allow customers to pick up items purchased from various shops at the same location.

30. The cartless shopping method of Claim 23, further comprising:
for cartless shopping for multiple stores that are close to each other, including but not limited to stores in a shopping mall or an outlet mall, the cartless shopping mobile app managing shopping centrally, including but not limited to: the customer checking the order preparation status of each store; only one final pickup notification being sent to the customer after all stores finish their order preparations.

31. A cartless shopping method where an order is delivered to a traditional key controlled vehicle, comprising:
(1) a customer parking their vehicle in the parking lot of a store, opening the cartless shopping mobile app, using the location service, for instance, based on Wi-Fi or GPS, on the mobile device to locate the current store, and checking in the mobile Internet shopping service in the mobile app; such service optionally being but not limited to a mobile web app or a mobile app; or the customer optionally using the mobile web app or mobile app provided by the current store;
(2) the customer putting the vehicle's key in a locker corresponding to the parking space, and the locker being permitted to be accessed by the customer and any store delivery person; the customer receiving a digital token to open the locker through the mobile app;
(3) optionally, the customer using an "indoor navigation" system, wherein, the customer enters the item's key word or item number, or uploads a picture of the item, the mobile app promptly provides the indoor location information, such as aisle/bay/shelf number, and also gives visual "indoor navigation map" information to visualize the customer's current location, the item's destination location, and the (best) route to get to the destination;
(4) the customer experiencing items in the store's showroom and using mobile device to scan the label/tag of any item they want to purchase or to scan the item itself using an object recognition technology, wherein,
the customer may see the inventory status of each item in the store, and may specify the quantity (or weight) of each item to be purchased; if the store does not have enough stock of a certain item, the customer may choose a nearby store and decide whether to pick up the items or have the items delivered;
in the cartless shopping mobile app, the customer may browse online product reviews, search and apply online discounts or coupons, search and request price match, etc.; if the price match request cannot be accepted by the store, the mobile app may conduct cost estimate for the customer to decide whether or not to purchase such item in the store via any of methods including but not limited to the following:
(A) if a lower price is found in a nearby store, the location service based on GPS on the mobile device provides an estimated extra cost to drive to the other store based on distance and gas price;
(B) a cost estimate model to calculate the time cost to purchase such item online at a lower price;
the customer optionally specifying for each item whether the item is to be delivered to the customer's vehicle, or the customer's home, or as a gift to other person's home;
(5) the customer paying for the items using a digital wallet based on existing technologies or a digital token system and obtaining the corresponding electronic receipt, the electronic receipt being regarded as a digital token issued by the store; the digital token optionally being linked to the digital token used to open the vehicle key locker;
(6) if the customer requires items to be delivered to their vehicle in the parking lot, the customer sending their vehicle parking location information to the store; vehicle parking location information optionally being obtained by the following methods: a parking lot location system (such as GPS parking location service); the store assigning a number to each parking space (similar to an airport parking numbering system) and the customer entering their own parking number in the mobile app; the customer entering their license plate number and the vehicle location being determined by a video monitor scanning system; the customer sending the locker number of the vehicle key locker to the store, the locker number corresponding to the parking space number.
(7) payment information being sent to the store and store workers preparing items in the warehouse;
(8) a delivery person retrieving the vehicle key from the locker, delivering the items to the vehicle's trunk and/or compartment, and putting the vehicle key back to the locker;
(9) the store pushing delivery notification to the customer through mobile app;
(10) the customer returning to the parking space, retrieving the vehicle key using the digital token of the locker or of the electronic receipt, and driving away from the store.

32. The cartless shopping method of Claim 31, further comprising:
a key exchange system wherein the customer puts their vehicle key in the locker corresponding to their parking space, and the locker can be accessed by the customer and any store delivery person.

33. The cartless shopping method of Claim 31, further comprising:
the customer sending their vehicle parking location information to the store via mobile app; the vehicle parking location information optionally being obtained by any of the following methods: parking lot location system such as GPS parking location service; the store assigning a number to each parking space (similar to an airport parking numbering system) and the customer entering their parking number in the mobile app; the customer entering their license plate number and the vehicle location being determined by the video monitor scanning system; the customer sending the locker number of the vehicle key locker to the store, the locker number corresponding to the parking space number.

34. A cartless shopping method for stores where an order is delivered to a wireless digital key controlled vehicle, comprising:
(1) a customer parking their vehicle in the parking lot of a store, opening a cartless shopping mobile app, using the location service, for instance, based on Wi-Fi or GPS, on the mobile device to locate the current store, and checking in the mobile Internet shopping service in the mobile app; such service optionally being but not limited to a mobile web app or a mobile app; or the customer optionally using the mobile web app or mobile app provided by the current store;
(2) optionally, the customer using an "indoor navigation" system, wherein the customer enters the item's key word or item number, or uploads a picture of the item, the mobile app promptly provides the indoor location information, such as aisle/bay/shelf number, and also gives visual "indoor navigation map" information to visualize the customer's current location, the item's destination location, and the (best) route to get to the destination.
(3) the customer experiencing items in the store's showroom and using the mobile device to scan the label/tag of any item they want to purchase or to scan the item itself using an object recognition technology, wherein,
the customer may see the inventory status of each item in the store, and may specify the quantity (or weight) of each item to be purchased; if the store does not have enough stock of a certain item, the customer may choose a nearby store and decide whether to pick up the items or have the items delivered;
in the cartless shopping mobile app, the customer may browse online product reviews, search and apply online discounts or coupons, search and request price match, etc.; if the price match request cannot be accepted by the store, the mobile app may conduct cost estimate for the customers to decide whether or not to purchase such item in the store via any of methods including but not limited to the following:
(A) if a lower price is found in a nearby store, the location service based on GPS on the mobile device provides an estimated extra cost to drive to the other store based on distance and gas price;
(B) a cost estimate model to calculate the time cost to purchase such item online at a lower price;
the customer optionally specifying for each item whether the item is to be delivered to the customer's vehicle, or the customer's house, or to other person's house as a gift;
(4) the customer paying for the items using a digital wallet based on existing technologies or a digital token system and obtaining the corresponding electronic receipt, the electronic receipt being regarded as a digital token issued by the store;
(5) if the customer requires items to be delivered to their vehicle in the parking lot, the customer sending their vehicle parking location information to the store; the vehicle parking location information optionally being obtained by any of the following methods:
a parking lot location system (such as GPS parking location service); the store assigning a number to each parking space (similar to an airport parking numbering system) and the customer entering their parking number in the mobile app; the customer entering their license plate number and the vehicle location being determined by a video monitor scanning system; the customer sending the locker number of the vehicle key locker to the store, the locker number corresponding to the parking space number;
at the same time the customer sending a temporary authorizing digital token to access their vehicle to the store in order for any delivery person to open the vehicle truck or compartment;
(6) the payment information being sent to the store and store workers preparing items in the warehouse;
(7) a delivery person delivering the items to the parking space, and using the said temporary digital token to access the vehicle truck and/or compartment; the customer's vehicle optionally having additional security measures such as video surveillance/recorder to surveil/record the user of the digital key and their actions;
(8) the store pushing the delivery notification to the customer through the mobile app; upon receiving this notification, the said temporary digital token to access the vehicle expiring automatically;
(9) the customer returning to the parking space and driving away from the store.

35. The cartless shopping method of Claim 34, further comprising:
the owner of the vehicle sending a temporary authorizing digital token to access their vehicle to another party, such as the store.

36. The cartless shopping method of Claim 34, further comprising:
the vehicle having additional security measures installed such as video surveillance/recorder to surveil/record the user of the digital lock and their actions.

37. A cartless shopping method as recited in Claim 31 or Claim 34, further comprising:
the same delivery person delivering items for multiple customers on one trip to the parking lot; the dispatch of the delivery person optionally being based on proximity of parking locations and delivery times.

38. A cartless shopping method as recited in Claim 31 or Claim 34, further comprising:
prior to delivery to the vehicle, the location of the delivery person and approximate "remaining time to arrival" being displayed in the map in the mobile app.

39. A cartless shopping method as recited in Claim 31 or Claim 34, further comprising:
the delivery "person" being robotized, automated, or unmanned, i.e., the human delivery person being replaced by a robot, an automatic machine, or a drone to deliver items to the vehicle in the parking lot.
